Europäisches Patentamt

European Patent Office

Office européen des brevets

(19)

(11) **EP 0 950 248 B1**

(12) **EUROPEAN PATENT SPECIFICATION**

(45) Date of publication and mention
of the grant of the patent:
**19.06.2002  Bulletin 2002/25**

(51) Int Cl.[7]: **G21C 15/243**
// G21C15/26

(21) Application number: **97949107.3**

(22) Date of filing: **23.12.1997**

(86) International application number:
**PCT/IT97/00315**

(87) International publication number:
**WO 98/28754 (02.07.1998 Gazette 1998/26)**

(54) **NUCLEAR REACTOR WITH IMPROVED NATURAL COOLANT CIRCULATION AND METHOD OF IMPROVING THE NATURAL CIRCULATION OF A COOLANT IN A NUCLEAR REACTOR**

KERNREAKTOR MIT EINEM VERBESSERTEN NATÜRLICHEN KÜHLMITTELKREISLAUF UND METHODE ZUR VERBESSERUNG DES NATÜRLICHEN KREISLAUFS EINES KÜHLMITTELS IN EINEM KERNREAKTOR

REACTEUR NUCLEAIRE A CIRCULATION NATURELLE AMELIOREE DU REFRIGERANT ET PROCEDE POUR AMELIORER LA CIRCULATION NATURELLE DU REFRIGERANT DANS UN REACTEUR NUCLEAIRE

(84) Designated Contracting States:
**BE CH DE ES FR IT LI**

(30) Priority: **24.12.1996  IT  TO961081**

(43) Date of publication of application:
**20.10.1999  Bulletin 1999/42**

(73) Proprietor: **ANSALDO ENERGIA S.P.A.**
**16152 Genova (IT)**

(72) Inventor: **CINOTTI, Luciano**
**I-16036 Recco (IT)**

(74) Representative: **Franzolin, Luigi et al**
**STUDIO TORTA S.r.l.,**
**Via Viotti, 9**
**10121 Torino (IT)**

(56) References cited:
**DE-A- 1 564 767          US-A- 4 043 867**
**US-A- 5 053 190**

**Description**

<u>TECHNICAL FIELD</u>

The present invention relates to a nuclear reactor with improved natural coolant circulation.

<u>BACKGROUND ART</u>

Nuclear reactors for producing electric energy are constructed in various ways, and, as regards the way in which the coolant is circulated, in particular, are substantially divided into forced and natural coolant circulation reactors.

The coolant, normally water, of known forced circulation reactors circulates through the core, in which the nuclear reaction takes place, removes heat from the core, flows through circuits outside the reactor vessel, releases heat in appropriate exchangers, and is then pumped back into the core.

So-called "integrated" reactors are also known, which have no external circuits, the heat exchangers being housed inside the vessel containing the core. This type of reactor, however, also comprises circulating pumps for feeding the coolant to the core and exchangers at a pressure of a few bars.

A major drawback of forced coolant circulation reactors is the complex cooling circuit required inside the vessel, in particular for feeding the coolant to the pumps at the output of the exchangers and then to the core. Moreover, short of reducing the size of the reactor by circulating the coolant at high speed, housing such a complex cooling circuit requires a large-diameter reactor.

To simplify the cooling circuit, nuclear reactors are also known in which recourse is made solely to natural coolant circulation.

In one known solution using water as the coolant, the core of the reactor is located at the bottom of a pressurized vessel; and the hot water from the core is fed to the top of the reactor by an up-conduit (so-called "riser") coaxial with the reactor vessel and open at the top beneath the free surface of the cooling water. The conduit houses the means by which to control the nuclear reaction (e.g. control rods or proton beams) and part of the core instruments. From the top of the vessel, the water flows down to the input of the core through heat exchangers located in the annular region between the up-conduit and the wall of the vessel.

Another known solution uses a liquid metal, e.g. lead, as the coolant, which fills part of a vessel, the top part of which is filled with an inert gas. In this case also, the liquid metal is circulated naturally by the difference in weight between the hot-coolant column over the core and the cold-coolant column in the annular region outside the core and defined, in this case also, by a cylindrical conduit coaxial with the reactor vessel. The cylindrical conduit is interrupted at the top of the reactor, beneath the layer of inert gas, to enable circulation of the liquid metal.

The technical problems posed by a liquid-metal nuclear reactor are known : above all, to prevent overheating the walls of the vessel, these must be kept at a fairly low temperature, close to that of the metal from the heat exchangers; and a certain amount of liquid metal must be kept circulating at the bottom of the reactor to prevent the liquid metal from solidifying.

In known solutions, separating structures are therefore interposed between the hot liquid metal entering the exchangers and the walls of the reactor vessel.

In known solutions, in the case of forced circulation, the bottom of the reactor is lapped by liquid metal entering the core at a higher pressure, and which is caused to overflow close to the lateral wall of the reactor vessel, above the normal level of the liquid metal bath, to prevent thermal losses heating the liquid metal stagnating in that region. This solution, however, may lead to other drawbacks, such as fluid-induced vibration.

On the other hand, the above solution is not even viable in the case of a natural circulation reactor.

Finally, in all the natural circulation reactors described, the driving force available to circulate the coolant is at most a few tens of thousands of Pa, so that coolant speed is low, thus requiring large-section passages.

Consequently, despite the extremely straightforward design of the structures inside the vessel of natural circulation systems, the vessel still remains of considerable size on account of the large-section passages required, and, to promote natural circulation, the difference required in the level of the heat exchangers and the core.

<u>DISCLOSURE OF INVENTION</u>

It is an object of the present invention to provide a nuclear reactor designed to overcome the aforementioned drawbacks typically associated with known reactors. More specifically, it is an object of the present invention to provide a nuclear reactor with natural coolant circulation to achieve a fairly straightforward design of the reactor, while at the same time obtaining fairly high coolant circulation speeds to reduce the size of the vessel and internal components.

Another object of the present invention is to provide a method for improving the natural circulation of a coolant in a nuclear reactor.

According to the present invention, there is provided a nuclear reactor with improved natural circulation of the coolant, comprising a vessel, the bottom portion of which houses a reaction core; at least a first heat exchanger; and hydraulic-circulation means for circulating said coolant between said core and said at least a first heat exchanger; characterized by also comprising auxiliary-circulation means for evenly feeding a first stream of gas into said coolant; said auxiliary-circulation means feeding said first stream of gas into said hydraulic-circulation means over and at a predetermined distance from said core, so as to increase the circulation speed of said coolant inside said hydraulic-circulation means.

While preserving the straightforward construction typical of conventional natural coolant circulation reactors, the reactor according to the present invention therefore has a "hot" column further lightened by the stream of gas, thus enabling faster circulation of the coolant, and a reduction in the size of all the internal components and, in other words, of the reactor itself.

According to the present invention there is also provided a method of improving the natural circulation of a coolant in a nuclear reactor according to claim 21.

BRIEF DESCRIPTION OF DRAWINGS

A number of non-limiting embodiments of the present invention will be described by way of example with reference to the accompanying drawings, in which:

Figure 1 shows a schematic longitudinal section of a nuclear reactor in accordance with the present invention and using water as the coolant;
Figure 2 shows a section along line II-II in Figure 1;
Figure 3 shows a schematic longitudinal section of a variation of the reactor according to the present invention and using liquid metal as the coolant;
Figure 4 shows a schematic, enlarged, not-to-scale view of a detail of the Figure 3 reactor;
Figure 5 shows a schematic view of a variation of the Figure 1 reactor;
Figure 6 shows a schematic view of a variation of the Figure 2 reactor.

BEST MODE FOR CARRYING OUT THE INVENTION

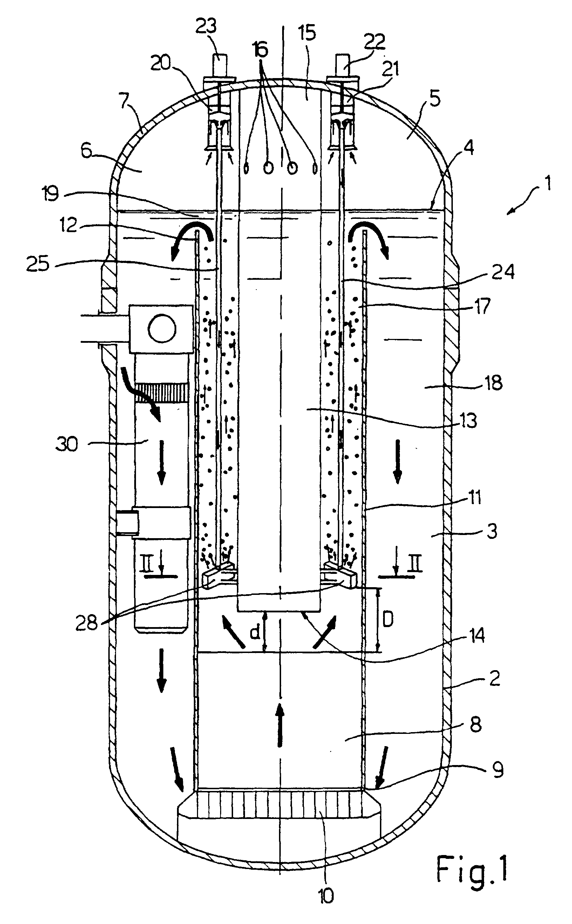

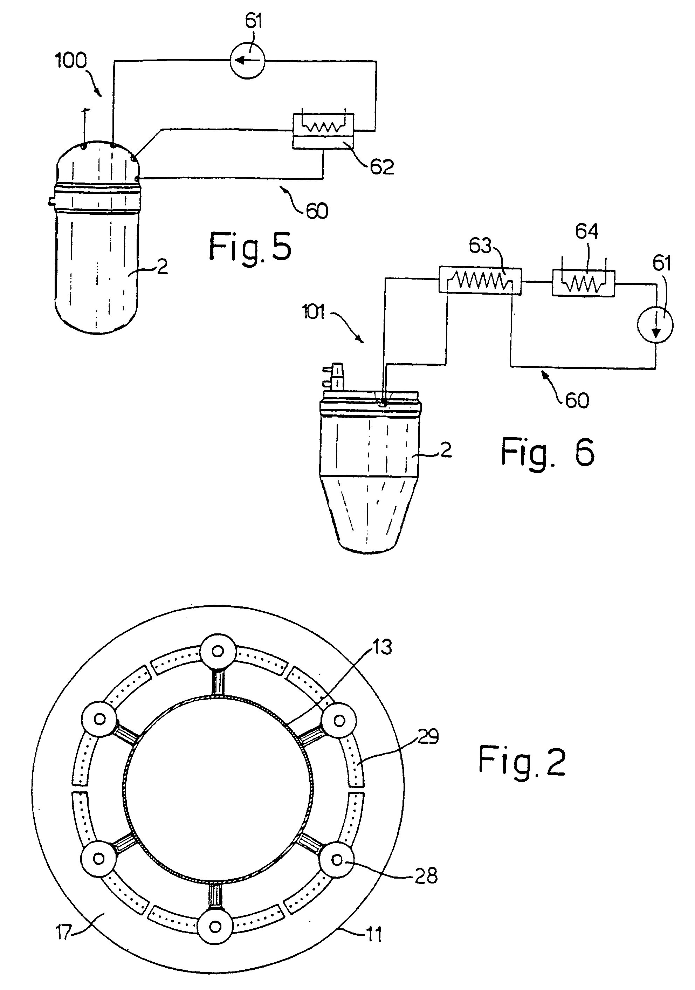

With reference to Figures 1 and 2, the nuclear reactor 1, of the natural coolant circulation type, comprises a substantially cylindrical outer casing or so-called vessel 2 containing a predetermined quantity of coolant 3 - in the example shown, water - to a predetermined level or "free surface" 4 inside vessel 2.

Reactor 1 also contains a predetermined quantity of an inert gas 5 inside a chamber 6 of vessel 2 extending between free surface 4 of coolant 3 and a cover 7 closing the top of vessel 2.

The bottom of vessel 2 houses the substantially known so-called reaction core 8 defined externally by a container 9. Core 8 is supported by a known grill 10, which conveys coolant 3 inside core 8. The top of container 9 is connected integrally to a vertical cylindrical conduit 11 of substantially the same diameter as, and in effect defining an extension of, container 9. Vertical conduit 11 is coaxial with vessel 2, and terminates with an annular edge 12 at a predetermined distance beneath level 4 of coolant 3.

A further cylindrical element 13 of predetermined diameter is housed coaxially inside conduit 11, is located a predetermined distance from core 8, and extends vertically above level 4 of coolant 3. In the example shown, element 13 is fitted to cover 7, but may also be anchored to the inner wall of conduit 11. The bottom end 14 of cylindrical element 13 is located over and at a distance d from the top of core 8, while, at the opposite end 15 above level 4 of coolant 3, element 13 has a number of through holes 16 formed in the lateral wall and by which to communicate with chamber 6.

The inner element 13 is removable to change the fuel in core 8, and may house nuclear reaction control means and part of the core instruments (of known type not shown).

Cylindrical conduit 11 and the inner wall of vessel 2 define a first annular conduit 18 along which coolant 3 flows downwards in use, as explained later on. Similarly, cylindrical conduit 11 and coaxial cylindrical element 13 define a second annular conduit 17 radially inwards with respect to first annular conduit 18, and along which coolant 3 flows upwards in use. The flow section of outer annular conduit 18 is greater than that of inner annular conduit 17.

The inner and outer annular conduits 17 and 18 communicate hydraulically with an annular passage 19 defined by the predetermined distance between top edge 12 of cylindrical conduit 11 and level 4 of coolant 3.

Above level 4, and therefore immersed in inert gas 5, two known blowers 20, 21 are fitted to cover 7 and powered by respective motors 23, 22 outside vessel 2. Blowers 20, 21 are connected by respective conduits 25, 24 to a number of diffusers 28, two of which are shown in Figure 1.

The number of blowers used and the number and distribution of the diffusers may of course differ as required. In a preferred embodiment shown in particular in Figure 2, the blowers (whatever the number) supply a number of diffusers 28 arranged in a circle inside annular conduit 17, close to and above end 14 of cylindrical element 13, and at a distance D, greater than distance d, from the top of core 8.

Diffusers 28 have a number of appropriately oriented gas supply nozzles 29. For example, nozzles 29 may face upwards (as in Figure 2), or may supply a horizontal stream of gas, or may be set at a predetermined angle of, say, 45°. Conduits 24, 25 are connected to diffusers 28 by sealed joints. As sealing is provided for at the bottom of conduits 24, 25, close to the level of nozzles 29, and as the difference in pressure between the inside and outside of conduits 24, 25 at joint level is minimum, the joints need not be particularly accurate. Moreover, any leakage would occur inside the coolant circulation conduit into which the gas is fed anyway.

Reactor 1 also comprises at least one known heat exchanger 30 housed inside outer annular conduit 18, and which provides for subtracting heat from coolant 3 circulating in reactor 1.

In actual use, blowers 20, 21 withdraw gas from chamber 6 and compress it to overcome the static seal of the coolant at the level corresponding to that of nozzles 29; the gas, fed along conduits 24, 25 to diffusers 28, is then distributed evenly by nozzles 29 into the mass of coolant along the whole annular extension of conduit 17.

Being lighter than the coolant encountered in conduit 17, the gas lightens and increases the upward speed of the coolant column in annular conduit 17.

At the outlet of conduit 17, the coolant speed is reduced by the increase in section produced by the predetermined distance between the top annular edge 12 of cylindrical conduit 11 and level 4 of the coolant, which distance, as stated, defines annular passage 19 hydraulically connecting inner annular conduit 17, along which the coolant and inert gas flow upwards, and outer annular conduit 18, along which only the coolant flows downwards.

The section of outer annular conduit 18 being greater than that of inner annular conduit 17, coolant speed is reduced and then inverted downwards at the outlet of annular passage 19. The gas, however, continues to float upwards, and is separated from the coolant and fed into gas 5 in chamber 6 at the top of reactor 1. As the gasless downward coolant column is heavier than the upward column, a draft is produced to improve the natural circulation of the coolant.

In other words, the gas traveling upwards along annular conduit 17 improves circulation of the coolant inside reactor 1, in the circuit comprising core 8, up-conduit 17, exchanger 30 and return conduit 18 to core 8.

While substantially maintaining the straightforward configuration of natural circulation solutions, the addition of circulating means for increasing the speed of the primary coolant therefore provides for significantly reducing the size of the reactor vessel and internal components.

The function of inner cylindrical element 13 is to define a conduit of such size as to ensure optimum upward flow of the coolant-gas mixture.

Cylindrical conduit 11, in fact, may have a very large section corresponding to a low coolant speed, and, for a given quantity of gas injected into the conduit, the fraction of the section occupied by the gas would be too small, on account of the relative upward speed of the gas and coolant.

That is:

$$S_{gas} = \frac{\theta_{gas}}{V_{gas}}$$

$$S_{liq} = \frac{\theta_{liq}}{V_{liq}}$$

where:

$S_{liq}$ = section occupied by the coolant
$S_{gas}$ = section occupied by the gas
$\theta_{liq}$ = coolant volume flow rate
$\theta_{gas}$ = gas volume flow rate
$V_{liq}$ = coolant speed
$V_{gas}$ = gas speed
$V_{gas}$ = $V_{liq} + V_R$ where $V_R$ = relative speed of gas and coolant

Approximately speaking, in the application in question, if $\theta_{gas} < \theta_{liq}$ is maintained, $V_R$ may be considered practically constant alongside a variation in $V_{liq}$, so that:

$$\frac{S_{gas}}{S_{liq}} = \frac{\theta_{gas}}{\theta_{liq}} \cdot \frac{V_{liq}}{V_{liq} + V_R}$$

For a given gas and coolant flow rate, therefore, the section occupied by the gas with respect to that occupied by the coolant increases alongside an increase in coolant speed $V_{liq}$, thus increasing the draft.

An increase in $V_{liq}$, however, increases the load losses of the coolant inside the gap, the section of which must therefore be optimized by inserting inner element 13.

Inner element 13 may, however, be dispensed with. In fact, in one such variation, conduit 11 alone is appropriately sized to define the up-conduit of coolant 3.

The present invention is especially suitable for nuclear reactors employing a liquid metal as the coolant.

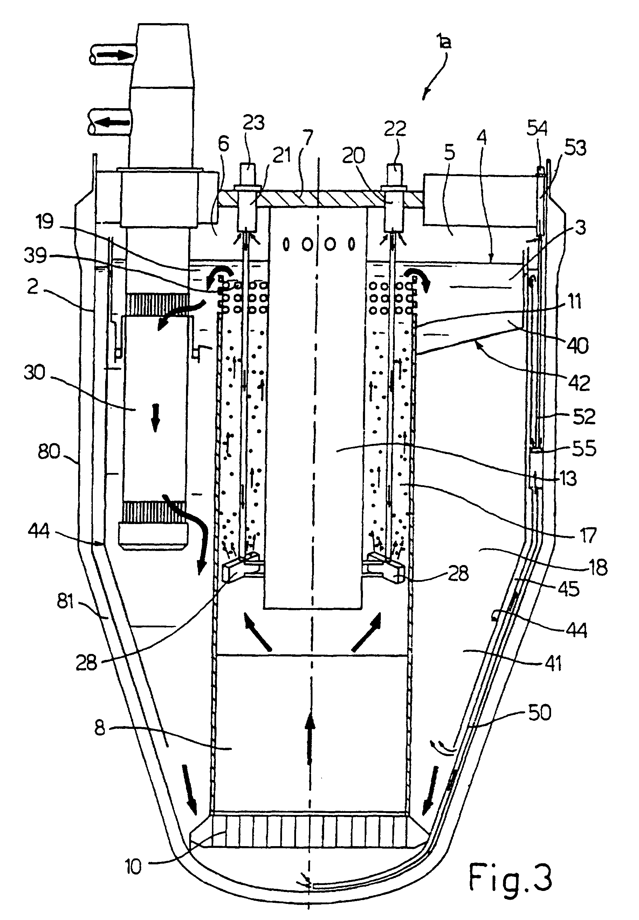

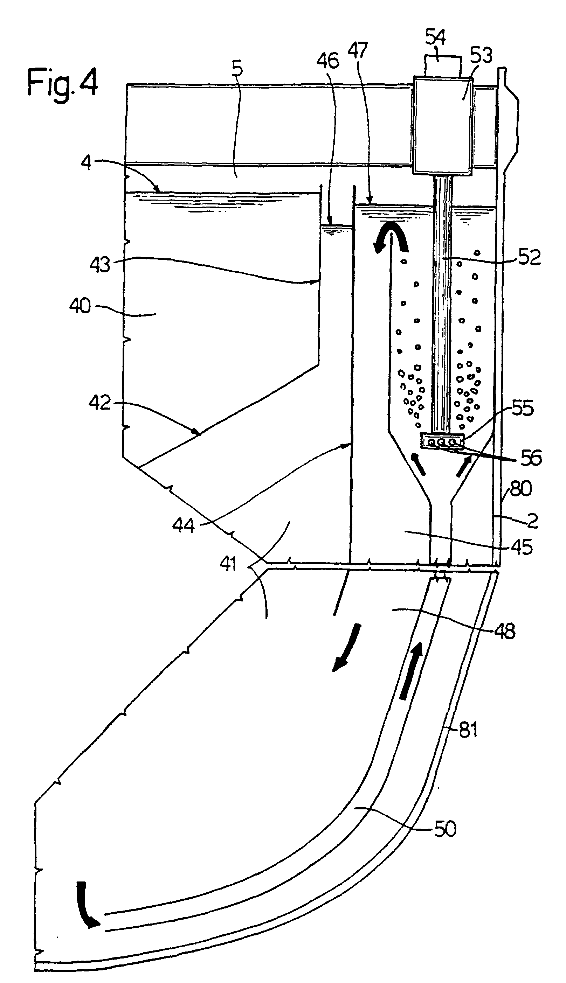

With reference to Figures 3 and 4, in which any details similar or identical to those already described are indicated using the same numbering system, 1a indicates as a whole a liquid-metal nuclear reactor in accordance with the present invention.

Like pressurized-water reactor 1 described above, nuclear reactor 1a comprises a substantially known vessel 2 housing a core 8 at the bottom; a second vessel 80 is provided outside vessel 2 to contain any coolant 3 escaping as a result of failure of vessel 2; and a gap 81 of predetermined volume is defined between inner vessel 2 and outer vessel 80.

Reactor 1a contains a predetermined quantity of coolant 3 - in the example shown, a liquid metal, such as lead - up to level (free surface) 4; and a predetermined volume of an inert gas 5 inside a chamber 6 above level 4 of liquid metal 3 and beneath a cover 7 closing the top of vessel 2.

Reactor 1a also comprises a vertical cylindrical conduit 11 and an inner cylindrical element 13, both identical to those described in connection with reactor 1.

As described above in connection with reactor 1, cylindrical conduit 11 and cylindrical element 13 are coaxial and define an inner annular conduit 17, while the inner wall of vessel 2 and cylindrical conduit 11 define an outer annular conduit 18.

Inner and outer annular conduits 17 and 18 communicate hydraulically via an annular passage 19 defined by the predetermined distance between the top edge 12 of cylindrical conduit 11 and level 4 of coolant 3. Hydraulic connection of annular conduits 17 and 18 is also ensured by a number of through holes 39 formed in the lateral wall of vertical conduit 11 and located at predetermined vertical distances from one another. In the event of an accidental fall in level 4, e.g. as a result of failure of inner vessel 2 and leakage of coolant 3 into gap 81, holes 39 provide for maintaining circulation of coolant 3 in reactor 1a and so preventing overheating of core 8. The arrangement of holes 39 is calculated according to the volume of gap 81 corresponding to the maximum quantity of coolant 3 which may leak from inner vessel 2.

Reactor 1a also comprises two known blowers 20, 21 housed inside chamber 6 filled with inert gas 5. Concerning the number and arrangement of the blowers and respective diffusers 28, what was said in connection with reactor 1 also applies here. Reactor 1a also comprises at least one known heat exchanger 30 housed inside annular conduit 18.

Reactor 1a also comprises in known manner an upper ("hot") manifold 40, which, in use, feeds the hot liquid metal to exchanger 30; and a lower ("cold") manifold 41, which, in use feeds the cold liquid metal from exchanger 30 to core 8. Manifolds 40, 41 are separated by a structure 42 of known configuration, having a cylindrical upper portion 43 coaxial with vessel 2.

A cylindrical wall 44, concentric with vessel 2, is located a predetermined radial distance from the inner lateral wall of vessel 2, and therefore defines, together with the lateral wall of vessel 2, an annular gap 45 forming part of cold manifold 41 and containing liquid metal, which, to mechanically safeguard vessel 2, must be maintained at a fairly low temperature, substantially equal to that at the output of exchanger 30.

Upper manifold 40, on the other hand, contains hot liquid metal, which manifold 40 feeds to exchanger 30. On account of the difference in temperature of the liquid metal in manifolds 40, 41, the liquid metal is at two different levels on either side of cylindrical portion 43 of structure 42 : at level 4 in hot manifold 40, and at a lower level 46 in cold manifold 41.

As already stated, in liquid-metal reactors, it is necessary to prevent overheating of the walls of vessel 2, and to prevent liquid metal 3 in hot manifold 40 from heating, by conduction, the adjacent liquid metal in the top portion of annular gap 45.

To solve the technical problems typical of the liquid-metal solution, reactor 1a comprises a number of conduits 50 - only one shown by way of example in Figures 3 and 4 - located adjacent to the inner wall of vessel 2 and at a predetermined distance from one another. Conduit 50 extends from the bottom of vessel 2, and terminates below the free surface 47 of the liquid metal in annular gap 45.

An upper portion of predetermined length of conduit 50 is fitted inside with a coaxial inner conduit 52, which projects from the top of conduit 50 into chamber 6 containing gas 5; at the top of conduit 52, in the gas region, there is provided a blower 53 powered by a motor 54 on top of cover 7 of vessel 2; and, at the opposite end to blower 53, inner conduit 52 terminates with a gas diffuser 55 with nozzles 56.

Under normal operating conditions, blower 53 draws gas from chamber 6 and injects it into conduit 50 via inner conduit 52 and diffuser 55 to recirculate the liquid metal coolant from the bottom of vessel 2 to free surface 47 and back into manifold 41 through the bottom end 48 of annular gap 45, as shown by the arrows in Figure 4.

Conduit 50 therefore provides for mixing the colder liquid metal at the bottom of reactor 1a with the hotter liquid metal at the top. Circulation inside conduit 50 is effected by injecting the conduit with a stream of gas drawn from chamber 6 by blower 53.

This therefore provides not only for preventing the liquid metal from solidifying at the bottom of reactor 1a, but also for preventing the wall of vessel 2 from being heated by conduction of heat from the hot liquid metal in manifold 40; which heat is removed by the stream of cold liquid metal drawn from the bottom of the reactor and fed out of conduit 50 and back down through annular gap 45.

In one variation, reactor 1a has no structure 42, and the function of maintaining the wall of vessel 2 at a fairly low temperature is performed solely by inner wall 44 and conduit 50.

Clearly, numerous variations of the nuclear reactor described above are possible, regardless of the coolant employed.

For example, as opposed to being housed inside casing 2 and immersed in gas 5 in chamber 6, the blower (or blowers) may be installed outside the reactor, so as to cool the circulating gas and so reduce blowing power, prevent the blower from operating at excessively high temperature (especially in the case of liquid-metal reactors), and/or recover heat.

Figure 5 shows one possible variation 100 of the nuclear reactor according to the invention, which features an external blower applied to a water-cooled nuclear reactor.

Reactor 100 is of the type described with reference to Figure 1, but comprises a hydraulic circuit 60 outside vessel 2 (the internal components of which are identical to those in Figure 1, with the exception of the internal blowers, and are therefore not shown). Circuit 60 substantially comprises a blower 61 and, preferably but not necessarily, an exchanger 62 in which to condense part of the steam in the coolant-inert gas mixture, and so reduce the power of blower 61 and externally remove a fraction of the heat generated by the reactor.

Clearly, a different number of external blowers and/or exchangers may be used.

The external-blower solution may also be applied to liquid-metal nuclear reactors, as shown in Figure 6.

Reactor 101, which, as regards the components inside vessel 2, is substantially identical to reactor 1a described with reference to Figure 3, also comprises a hydraulic circuit 60 outside vessel 2 and in turn comprising at least one blower 61. Circuit 60 preferably also comprises two series exchangers 63 and 64 upstream from blower 61.

To reduce the power of the blower, the gas is fed successively through exchangers 63 and 64 to cool it down to almost ambient temperature before entering blower 61. In exchanger 63, the cold fluid is defined by the same gas coming from blower 61.

In solutions relating to liquid-metal reactors in which the heat exchangers inside the reactor function as actual steam generators, the additional external cooling circuits could also perform a safety function by condensing the steam given off in emergency situations resulting from failure of the internal exchanger pipes.

Clearly, further changes may be made to the nuclear reactor according to the present invention without, however, departing from the scope defined by the accompanying Claims.

**Claims**

1. A nuclear reactor (1, 1a) with improved natural circulation of the coolant (3), comprising a vessel (2), the bottom portion of which houses a reaction core (8); at least a first heat exchanger (30); and hydraulic-circulation means (11, 18) for circulating said coolant (3) between said core (8) and said at least a first heat exchanger (30); **characterized by** also comprising auxiliary-circulation means for evenly feeding a first stream of gas (5) into said coolant (3); said auxiliary-circulation means feeding said first stream of gas (5) into said hydraulic-circulation means (11, 18) over and at a predetermined distance (D) from said core (8), so as to increase the circulation speed of said coolant (3) inside said hydraulic-circulation means (11, 18).

2. A nuclear reactor as claimed in Claim 1, **characterized in that** said hydraulic-circulation means (11, 18) are so formed as to separate said gas (5) from said coolant (3) at the top of said vessel (2).

3. A nuclear reactor as claimed in Claim 1 or 2, **characterized in that** said vessel (2) contains predetermined quantities of said coolant (3) and said gas (5); said coolant (3) defining a bath defined at the top by a free surface (4) at a predetermined level; and said gas (5) being housed inside a chamber (6) of said vessel (2), said chamber extending between said free surface (4) and a top cover (7) of said vessel (2).

4. A nuclear reactor as claimed in one of the foregoing Claims, **characterized in that** said hydraulic-circulation means comprise at least a first vertical conduit (11) coaxial with said vessel (2); said first vertical conduit (11) defining, together with said vessel (2), a first annular conduit (18).

5. A nuclear reactor as claimed in Claim 4, **characterized in that** said first vertical conduit (11) coaxial with said vessel (2) is located over said core (8), constitutes an extension of a container (9) of said core, and terminates beneath said free surface (4) of the coolant (3).

6. A nuclear reactor as claimed in Claim 4 or 5, **characterized in that** said hydraulic-circulation means also comprise at least an inner element (13) coaxial with said first vertical conduit (11); said first vertical conduit (11) and said inner element (13) defining a second annular conduit (17) radially inwards with respect to said first annular conduit (18).

7. A nuclear reactor as claimed in Claim 6, **characterized in that** said inner element (13) coaxial with said first vertical conduit (11) extends vertically from a predetermined distance (d) from said core (8), and projects beyond said free surface (4) of the coolant (3) into said chamber (6); the inside of said inner element (13) communicating hydraulically with said chamber (6); said inner element (13) being secured to said cover (7) of the vessel (2), and having a number of first through holes (16) formed in a lateral surface of the inner element above said free surface (4).

8. A nuclear reactor as claimed in one of the foregoing Claims from 4 to 7, **characterized in that** said first vertical conduit (11) terminates beneath and at a predetermined distance from said free surface (4) of the coolant (3), so as to form an annular passage (19) for said coolant (3) between said first vertical conduit (11) and said first annular conduit (18); the flow section of said first annular conduit (18) being greater than the flow section of said first vertical conduit (11) to reduce the speed of said coolant to a predetermined value at said annular passage (19) and permit the separation of said gas (5) from said coolant (3).

9. A nuclear reactor as claimed in Claim 8, **characterized in that** an upper portion of a lateral wall of said first vertical conduit (11) has a number of second through holes (39) for ensuring hydraulic communication between said first vertical conduit (11) and said first annular conduit (18) even in the event of a fall in the level of said free surface (4) of the coolant (3).

10. A nuclear reactor as claimed in one of the foregoing Claims, **characterized in that** said auxiliary-circulation means comprise at least a first blower (20, 21), and at least a respective distributing system (24, 25, 28) for distributing said gas (5) in a given portion of said coolant (3).

11. A nuclear reactor as claimed in Claim 10, **characterized in that** said distributing system for distributing said gas (5) in said coolant (3) comprises, for each blower (20, 21), at least a first diffuser (28) located inside said first vertical conduit (11), above the bottom end of said inner element (13); and means (24, 25) for hydraulically connecting said at least a first blower (20, 21) and said first diffuser (28).

12. A nuclear reactor as claimed in Claim 11, **characterized in that** said at least a first diffuser (28) comprises a number of nozzles (29) arranged in a circle inside said second annular conduit (17).

13. A nuclear reactor as claimed in one of the foregoing Claims from 1 to 12, **characterized in that** said coolant (3) is defined by pressurized water.

14. A nuclear reactor as claimed in one of the foregoing Claims from 1 to 12, **characterized in that** said coolant (3) is defined by a liquid metal.

15. A nuclear reactor as claimed in Claim 14, **characterized by** comprising an inner wall (44) adjacent to an upper portion of a lateral wall of said vessel (2); said inner wall (44) extending beyond said free surface (4) of the coolant (3) and defining, together with said lateral wall of the vessel (2), an annular gap (45); said annular gap (45) communicating hydraulically at the top with said chamber (6) and at the bottom with said coolant (3).

16. A nuclear reactor as claimed in Claim 15, **characterized by** also comprising at least a second conduit (50) adjacent to said lateral wall of said vessel (2), said second conduit (50) extending from a bottom portion of the vessel (2), beneath said core (8), to the vicinity of said free surface (4) of the coolant (3); and means for injecting, at a predetermined height, a second stream of gas into said second conduit (50).

17. A nuclear reactor as claimed in one of the foregoing Claims from 10 to 16, **characterized in that** said at least a first blower (20, 21) is located inside said vessel (2), is immersed in the gas (5) in said chamber (6), above said free surface (4) of the coolant (3), and is activated by a motor (22, 23) located outside said vessel (2).

18. A nuclear reactor as claimed in one of the foregoing Claims from 10 to 16, **characterized in that** said at least a first blower (61) is located outside said vessel (2); and said auxiliary-circulation means comprise at least a hydraulic connecting circuit (60) between the gas (5) in said chamber (6) and said blower (61), and between said blower (61) and said respective distributing system.

19. A nuclear reactor as claimed in Claim 18, **characterized in that** said hydraulic connecting circuit (60) comprises at least a heat exchanger (62) and/or at least a steam condenser (63) for withdrawing a portion of the heat generated by said reactor.

20. A nuclear reactor as claimed in Claim 18 or 19, **characterized in that** said hydraulic connecting circuit (61) comprises a least a second heat exchanger (64) located in series and upstream from said first blower (61).

21. A method of improving the natural circulation of a coolant in a nuclear reactor (1, 1a), the nuclear reactor (1, 1a) comprising a vessel (2), the bottom portion of which houses a reactor core (8); at least a first heat exchanger (30); and hydraulic-circulation means (11, 18) for circulating said coolant (3) between said core (8) and said at least a first heat exchanger (30); **characterized by** feeding a stream of gas (5) evenly into said coolant (3); said stream of gas (5) being fed into at least a given portion of said coolant (3) inside said hydraulic-circulation means (11, 18) and above and at a predetermined distance (D) from said core (B), so as to increase the circulation speed of said coolant (3) in said hydraulic-circulation means (11, 18).

**Patentansprüche**

1. Kernreaktor (1, 1a) mit verbessertem natürlichem Kreislauf des Kühlmittels (3), mit einem Aufnahmeraum (2), dessen unterer Teil einen Reaktorkern (8) beherbergt; mindestens einem ersten Wärmetauscher (30); und einer Hydraulik-Umwälzeinrichtung (11, 18) zum Umwälzen des Kühlmittels (3) zwischen dem Kern (8) und dem mindestens ersten Wärmetauscher (30); **dadurch gekennzeichnet, dass** er auch eine Hilfs-Umwälzeinrichtung zum gleichmäßigen Zuführen eines ersten Stroms eines Gases (5) in das Kühlmittel (3) aufweist, die den ersten Strom des Gases (5) mit einem vorbestimmten Abstand (D) über dem Kern (8) in die Hydraulik-Umwälzeinrichtung (11, 18) einspeist, um die Umwälzgeschwindigkeit des Kühlmittels (3) innerhalb derselben zu erhöhen.

2.  Kernreaktor nach Anspruch 1, **dadurch gekennzeichnet, dass** die Hydraulik-Umwälzeinrichtung (11, 18) so ausgebildet ist, dass sie das Gas (5) an der Oberseite des Aufnahmeraums (2) vom Kühlmittel (3) trennt.

3.  Kernreaktor nach Anspruch 1 oder 2, **dadurch gekennzeichnet, dass** der Aufnahmeraum (2) vorbestimmte Mengen des Kühlmittels (3) und des Gases (5) enthält; wobei das Kühlmittel (3) ein Bad bildet, das an der Oberseite eine freie Oberfläche (4) auf vorbestimmtem Pegel bildet; und das Gas (5) innerhalb einer Kammer (6) des Aufnahmeraums (2) untergebracht ist, die sich zwischen der freien Oberfläche (4) und einer oberen Abdeckung (7) des Aufnahmeraums (2) erstreckt.

4.  Kernreaktor nach einem der vorstehenden Ansprüche, **dadurch gekennzeichnet, dass** die Hydraulik-Umwälzeinrichtung mindestens eine erste vertikale Leitung (11) koaxial mit dem Aufnahmeraum (2) aufweist, die gemeinsam mit diesem eine erste ringförmige Leitung (18) bildet.

5.  Kernreaktor nach Anspruch 4, **dadurch gekennzeichnet, dass** die erste, mit dem Aufnahmeraum (2) koaxiale vertikale Leitung (11) über dem Kern (8) liegt, eine Verlängerung eines Behälters (9) des Kerns bildet und unterhalb der freien Oberfläche (4) des Kühlmittels (3) endet.

6.  Kernreaktor nach Anspruch 4 oder 5, **dadurch gekennzeichnet, dass** die Hydraulik-Umwälzeinrichtung auch mindestens ein inneres Element (13) koaxial mit der ersten vertikalen Leitung (11) aufweist, wobei diese erste vertikale Leitung (11) und das innere Element (13) eine zweite ringförmige Leitung (17) bilden, die sich radial in Bezug auf die erste ringförmige Leitung (18) nach innen erstreckt.

7.  Kernreaktor nach Anspruch 6, **dadurch gekennzeichnet, dass** sich das innere Element (13) koaxial mit der ersten vertikalen Leitung (11) ab einem vorbestimmten Abstand (D) vom Kern (8) vertikal erstreckt und über die freie Oberfläche (4) des Kühlmittels (3) in die Kammer (6) vorsteht; wobei das Innere des inneren Elements (13) in Hydraulikverbindung mit der Kammer (6) steht und dieses innere Element (13) an der Abdeckung (7) des Aufnahmeraums (2) befestigt ist und über eine Anzahl erster Durchgangslöcher (16) verfügt, die in einer Querseite des inneren Elements über der freien Oberfläche (4) ausgebildet sind.

8.  Kernreaktor nach einem der vorstehenden Ansprüche 4 bis 7, **dadurch gekennzeichnet, dass** die erste vertikale Leitung (11) an einem vorbestimmten Abstand unter der freien Oberfläche (4) des Kühlmittels (3) endet, um einen ringförmigen Kanal (19) für das Kühlmittel (3) zwischen der ersten vertikalen Leitung (11) und der ersten ringförmigen Leitung (18) zu bilden; wobei der Strömungsquerschnitt der ersten ringförmigen Leitung (18) größer als derjenige der ersten vertikalen Leitung (11) ist, um die Geschwindigkeit des Kühlmittels im ringförmigen Kanal (19) auf einen vorbestimmten Wert abzusenken und eine Trennung des Gases (5) vom Kühlmittel (3) zu ermöglichen.

9.  Kernreaktor nach Anspruch 8, **dadurch gekennzeichnet, dass** ein oberer Teil einer Querwand der ersten vertikalen Leitung (13) eine Anzahl zweiter Durchgangslöcher (39) aufweist, um für Hydraulikverbindung zwischen der ersten vertikalen Leitung (11) und der ersten ringförmigen Leitung (18) selbst dann zu sorgen, wenn der Pegel der freien Oberfläche (4) des Kühlmittels (3) abfällt.

10.  Kernreaktor nach einem der vorstehenden Ansprüche, **dadurch gekennzeichnet, dass** die Hilfs-Umwälzeinrichtung mindestens ein erstes Gebläse (20, 21) und mindestens ein jeweiliges Verteilsystem (24, 25, 28) zum Verteilen des Gases (5) in einem vorgegebenen Teil des Kühlmittels (3) aufweist.

11.  Kernreaktor nach Anspruch 10, **dadurch gekennzeichnet, dass** das Verteilsystem zum Verteilen des Gases (5) im Kühlmittel (3) für jedes Gebläse (20, 21) mindestens einen ersten Diffusor (28) innerhalb der ersten vertikalen Leitung (11) über dem unteren Ende des inneren Elements (13) und eine Einrichtung (24, 25) zum hydraulischen Verbinden des mindestens ersten Gebläses (20, 21) und des ersten Diffusors (28) aufweist.

12.  Kernreaktor nach Anspruch 11, **dadurch gekennzeichnet, dass** der mindestens erste Diffusor (28) eine Anzahl von Düsen (29) aufweist, die in einem Kreis innerhalb der zweiten ringförmigen Leitung (17) angeordnet sind.

13.  Kernreaktor nach einem der vorstehenden Ansprüche 1 bis 12, **dadurch gekennzeichnet, dass** das Kühlmittel (3) aus Druckwasser besteht.

14.  Kernreaktor nach einem der vorstehenden Ansprüche 1 bis 12, **dadurch gekennzeichnet, dass** das Kühlmittel (3) aus einem flüssigen Metall besteht.

15.  Kernreaktor nach Anspruch 14, **dadurch gekennzeichnet, dass** er eine innere Wand (44) angrenzend an einen oberen Teil einer Querwand des Aufnahmeraums (2) aufweist; sich die Innenwand (44) über die freie Oberfläche (4) des Kühlmittels (3) hinaus erstreckt und gemeinsam mit der Querwand des Aufnahmeraums (2) einen ringförmigen Zwischenraum (45) bildet, der an der Oberseite hydraulisch mit der Kammer (6) und an der Unterseite mit dem Kühlmittel (3) in Verbindung steht.

16. Kernreaktor nach Anspruch 15, **gekennzeichnet durch** mindestens auch eine zweite Leitung (50) benachbart zur Querwand des Aufnahmeraums (2), die sich vom Bodenteil des Aufnahmeraums (2) unter dem Kern (8) bis in die Nähe der freien Oberfläche (4) des Kühlmittels (3) erstreckt; und eine Einrichtung zum Injizieren eines zweiten Gasstroms in vorbestimmter Höhe in die zweite Leitung (50).

17. Kernreaktor nach einem der vorstehenden Ansprüche 10 bis 16, **dadurch gekennzeichnet, dass** das mindestens erste Gebläse (20, 21) innerhalb des Aufnahmeraums (2) liegt, in das Gas (5) in der Kammer (6) über der freien Oberfläche (4) des Kühlmittels (3) eingetaucht ist und durch einen Motor (22, 23) aktiviert wird, der sich außerhalb des Aufnahmeraums (2) befindet.

18. Kernreaktor nach einem der vorstehenden Ansprüche 10 bis 16, **dadurch gekennzeichnet, dass** das mindestens erste Gebläse (61) außerhalb des Aufnahmeraums (2) liegt und die Hilfs-Umwälzeinrichtung mindestens einen Hydraulik-Verbindungskreis (60) zwischen dem Gas (5) in der Kammer (6) und dem Gebläse (61) sowie zwischen diesem und dem jeweiligen Verteilsystem aufweist.

19. Kernreaktor nach Anspruch 18, **dadurch gekennzeichnet, dass** der Hydraulik-Verbindungskreis (60) mindestens einen Wärmetauscher (62) und/oder mindestens einen Dampfkondensator (63) aufweist, um einen Teil der vom Reaktor erzeugten Wärme zu entziehen.

20. Kernreaktor nach Anspruch 18 oder 19, **dadurch gekennzeichnet, dass** der Hydraulik-Verbindungskreis (61) mindestens einen zweiten Wärmetauscher (64) aufweist, der stromaufwärts zum ersten Gebläse (61) mit diesem in Reihe liegt.

21. Verfahren zum Verbessern des natürlichen Kreislaufs eines Kühlmittels in einem Kernreaktor (1, 1a), der einen Aufnahmeraum (2), dessen unterer Teil einen Reaktorkern (8) aufnimmt; mindestens einen ersten Wärmetauscher (30) und eine Hydraulik-Umwälzeinrichtung (11, 18) zum Umwälzen des Kühlmittels (3) zwischen dem Kern (8) und dem mindestens ersten Wärmetauscher (30) aufweist; **gekennzeichnet durch** das Einspeisen eines Stroms eines Gases (5) in gleichmäßiger Weise in das Kühlmittel (3); wobei dieser Strom des Gases (5) in mindestens einen vorgegebenen Teil des Kühlmittels (3) innerhalb der Hydraulik-Umwälzeinrichtung (11, 18) und mit einem vorbestimmten Abstand (D) über dem Kern (8) eingespeist wird, um die Umwälzgeschwindigkeit des Kühlmittels (3) in der Hydraulik-Umwälzeinrichtung (11, 18) zu erhöhen.

## Revendications

1. Réacteur nucléaire (1, 1a) avec circulation naturelle améliorée du réfrigérant (3), comprenant une cuve (2), dont la portion inférieure loge un coeur de réacteur (8) ; au moins un premier échangeur thermique (30) ; et des moyens de circulation hydraulique (11, 18) pour faire circuler ledit réfrigérant (3) entre ledit coeur (8) et ledit au moins un premier échangeur thermique (30) ; **caractérisé** en comprenant également des moyens de circulation auxiliaire en vue d'alimenter uniformément un premier courant de gaz (5) dans ledit réfrigérant (3) ; lesdits moyens de circulation auxiliaire alimentant ledit premier courant de gaz (5) dans lesdits moyens de circulation hydraulique (11, 18) au-dessus et à une distance prédéterminée (D) dudit coeur (8), de manière à augmenter la vitesse de circulation dudit réfrigérant (3) à l'intérieur desdits moyens de circulation hydraulique (11, 18).

2. Réacteur nucléaire selon la revendication 1, **caractérisé en ce que** lesdits moyens de circulation hydraulique (11, 18) sont ainsi formés de manière à séparer ledit gaz (5) dudit réfrigérant (3) au sommet de ladite cuve (2).

3. Réacteur nucléaire selon la revendication 1 ou 2, **caractérisé en ce que** ladite cuve (2) contient des quantités prédéterminées dudit réfrigérant (3) et dudit gaz (5) ; ledit réfrigérant (3) définissant un bain défini au sommet par une surface libre (4) à un niveau prédéterminé ; et ledit gaz (5) étant logé à l'intérieur d'une chambre (6) de ladite cuve (2), ladite chambre se prolongeant entre ladite surface libre (4) et un couvercle supérieur (7) de ladite cuve (2).

4. Réacteur nucléaire selon l'une quelconque des revendications précédentes, **caractérisé en ce que** lesdits moyens de circulation hydraulique comprennent au moins un premier conduit vertical (11), coaxial avec ladite cuve (2) ; ledit premier conduit vertical (11) définissant, conjointement à ladite cuve (2), un premier conduit annulaire (18).

5. Réacteur nucléaire selon la revendication 4, **caractérisé en ce que** ledit premier conduit vertical (11), coaxial avec ladite cuve (2), est situé par-dessus ledit coeur (8), constitue une extension d'un récipient (9) dudit coeur et se termine en dessous de ladite surface libre (4) du réfrigérant (3).

6. Réacteur nucléaire selon la revendication 4 ou 5, **caractérisé en ce que** lesdits moyens de circulation hydraulique comprennent également au moins un élément interne (13), coaxial avec ledit premier conduit vertical (11) ; ledit premier conduit vertical (11) et ledit élément interne (13) définissant un deuxième conduit annulaire (17), se dirigeant radialement vers l'intérieur par rapport audit premier conduit annulaire (18).

7. Réacteur nucléaire selon la revendication 6, **caractérisé en ce que** ledit élément interne (13), coaxial avec ledit premier conduit vertical (11), se prolonge verticalement à partir d'une distance prédéterminée (d) dudit coeur (8), et fait saillie au-delà de ladite surface libre (4) du réfrigérant (3) dans ladite chambre (6) ; l'intérieur dudit élément interne (13) communiquant par voie hydraulique avec ladite chambre (6) ; ledit élément interne (13) étant fixé audit couvercle (7) de la cuve (2), et ayant un certain nombre de premiers trous traversants (16), formés dans une surface latérale de l'élément interne au-dessus de ladite surface libre (4).

8. Réacteur nucléaire selon l'une quelconque des revendications 4 à 7, **caractérisé en ce que** ledit premier conduit vertical (11) se termine en dessous et à une distance prédéterminée de ladite surface libre (4) du réfrigérant (3), de manière à former un passage annulaire (19) pour ledit réfrigérant (3) entre ledit premier conduit vertical (11) et ledit premier conduit annulaire (18) ; la section transversale d'écoulement dudit premier conduit annulaire (18) étant plus grande que la section transversale d'écoulement dudit premier conduit vertical (11) pour réduire la vitesse dudit réfrigérant à une valeur prédéterminée audit passage annulaire (19) et pour permettre la séparation dudit gaz (5) dudit réfrigérant (3).

9. Réacteur nucléaire selon la revendication 8, **caractérisé en ce qu'**une portion supérieure d'une paroi latérale dudit premier conduit vertical (11) possède un certain nombre de deuxièmes trous traversants (39) en vue d'assurer la communication hydraulique entre ledit premier conduit vertical (11) et ledit premier conduit annulaire (18), même dans l'hypothèse d'une chute du niveau de ladite surface libre (4) du réfrigérant (3).

10. Réacteur nucléaire selon l'une quelconque des revendications précédentes, **caractérisé en ce que** lesdits moyens de circulation auxiliaire comprennent au moins une première soufflante (20, 21) et au moins un système de distribution correspondant (24, 25, 28) en vue de la distribution dudit gaz (5) dans une portion donnée dudit réfrigérant (3).

11. Réacteur nucléaire selon la revendication 10, **caractérisé en ce que** ledit système de distribution en vue de distribuer ledit gaz (5) dans ledit réfrigérant (3), comprend, pour chaque soufflante (20, 21), au moins un premier diffuseur (28), situé à l'intérieur dudit premier conduit vertical (11), au-dessus de l'extrémité inférieure dudit élément interne (13) ; et des moyens (24, 25) en vue de connecter hydrauliquement ladite au moins une première soufflante (20, 21) et ledit premier diffuseur (28).

12. Réacteur nucléaire selon la revendication 11, **caractérisé en ce que** ledit au moins un premier diffuseur (28) comprend un certain nombre de buses (29) agencées dans un cercle à l'intérieur dudit deuxième conduit annulaire (17).

13. Réacteur nucléaire selon l'une quelconque des revendications précédentes 1 à 12, **caractérisé en ce que** ledit réfrigérant (3) est défini par de l'eau pressurisée.

14. Réacteur nucléaire selon l'une quelconque des revendications précédentes 1 à 12, **caractérisé en ce que** ledit réfrigérant (3) est défini par un métal liquide.

15. Réacteur nucléaire selon la revendication 14, **caractérisé** en comprenant une paroi interne (44), adjacente à une portion supérieure d'une paroi latérale de ladite cuve (2) ; ladite paroi interne (44) se prolongeant au-delà de ladite surface libre (4) du réfrigérant (3) et définissant, conjointement à ladite paroi latérale de la cuve (2), un interstice annulaire (45) ; ledit interstice annulaire (45) communiquant par voie hydraulique, au sommet de ladite chambre (6) et au fond, avec ledit réfrigérant (3).

16. Réacteur nucléaire selon la revendication 15, **caractérisé** en comprenant également au moins un deuxième conduit (50), adjacent à ladite paroi latérale de ladite cuve (2), ledit deuxième conduit (50) se prolongeant d'une portion inférieure de la cuve (2), en dessous dudit coeur (8), au voisinage de ladite surface libre (4) du réfrigérant (3) ; et des moyens d'injection, à une hauteur prédéterminée, d'un deuxième courant de gaz dans ledit deuxième conduit (50).

17. Réacteur nucléaire selon l'une quelconque des revendications précédentes 10 à 16, **caractérisé en ce que** ladite au moins une première soufflante (20, 21) est située à l'intérieur de ladite cuve (2), est immergée dans le gaz (5) dans ladite chambre (6), au-dessus de ladite surface libre (4) du réfrigérant (3), et est activée par un moteur (22, 23) situé à l'extérieur de ladite cuve (2).

18. Réacteur nucléaire selon l'une quelconque des revendications précédentes 10 à 16, **caractérisé en ce que** ladite au moins une première soufflante (61) est située à l'extérieur de ladite cuve (2) ; et **en ce que** lesdits moyens de circulation auxiliaire comprennent au moins un circuit de connexion hydraulique (60) entre le gaz (5) dans ladite chambre (6) et ladite soufflante (61), et entre ladite soufflante (61) et ledit système de distribution correspondant.

19. Réacteur nucléaire selon la revendication 18, **caractérisé en ce que** ledit circuit de connexion hydraulique (60) comprend au moins un échangeur thermique (62) et/ou au moins un condenseur de vapeur (63) en vue du retrait d'une portion de la chaleur générée par ledit réacteur.

20. Réacteur nucléaire selon la revendication 18 ou 19, **caractérisé en ce que** ledit circuit de connexion hydraulique (61) comprend au moins un deuxième échangeur thermique (64), situé en série et en amont de ladite première soufflante (61).

21. Méthode d'amélioration de la circulation naturelle d'un réfrigérant dans un réacteur nucléaire (1, 1a), le réacteur nucléaire (1, 1a) comprenant une cuve (2), dont la portion inférieure loge un coeur de réacteur (8) ; au moins un premier échangeur thermique (30) ; et des moyens de circulation hydraulique (11, 18) en vue de la circulation dudit réfrigérant (3) entre ledit coeur (8) et ledit au moins un premier échangeur thermique (30) ; **caractérisé par** l'alimentation uniforme d'un courant de gaz (5) dans ledit réfrigérant (3) ; ledit courant de gaz (5) étant alimenté dans au moins une portion donnée dudit réfrigérant (3) à l'intérieur desdits moyens de circulation hydraulique (11, 18) et au-dessus et à une distance prédéterminée (D) dudit coeur (8), de manière à augmenter la vitesse de circulation dudit réfrigérant (3) dans lesdits moyens de circulation hydraulique (11, 18).

Fig.1

Fig.5

Fig. 6

Fig.2

Fig.3

Fig. 4